Europäisches Patentamt

European Patent Office

Office européen des brevets

(11) Veröffentlichungsnummer: **0 284 713 B1**

# (12) EUROPÄISCHE PATENTSCHRIFT

(45) Veröffentlichungstag der Patentschrift: **10.06.92**

(21) Anmeldenummer: **88100427.9**

(22) Anmeldetag: **14.01.88**

(51) Int. Cl.⁵: **E05B 65/38**, F16K 3/34

(54) **Ventileinrichtung.**

(30) Priorität: **03.04.87 DE 3711340**

(43) Veröffentlichungstag der Anmeldung:
**05.10.88 Patentblatt 88/40**

(45) Bekanntmachung des Hinweises auf die
Patenterteilung:
**10.06.92 Patentblatt 92/24**

(84) Benannte Vertragsstaaten:
**DE FR GB IT**

(56) Entgegenhaltungen:
**DE-A- 3 223 016**
**FR-A- 2 550 307**
**US-A- 3 123 090**

(73) Patentinhaber: **VDO Adolf Schindling AG**
**Gräfstrasse 103**
**W-6000 Frankfurt/Main 90(DE)**

(72) Erfinder: **Jurr, Richard**
**Langenbergstrasse 11**
**W-6292 Weilmünster(DE)**

(74) Vertreter: **Klein, Thomas, Dipl.-Ing. (FH)**
**Sodener Strasse 9 Postfach 6140**
**W-6231 Schwalbach a. Ts.(DE)**

## Beschreibung

Die Erfindung bezieht sich auf eine Ventileinrichtung zwischen einer zur Erzeugung von Über- bzw. Unterdruck in zwei Drehrichtungen zu betreibenden Flügelzellenpumpe und einer zentralen Türverriegelungsanlage. Solche Ventileinrichtungen werden in hydraulischen und pneumatischen Anlagen eingesetzt und sind allgemein bekannt.

So ist beispielsweise aus der DE-A-3 223 016 eine pneumatische Zentralverriegelungsanlage mit einer Flügelzellenpumpe bekannt, bei der eine Flügelrückführung vorgesehen ist, die bei Pumpenstillstand einen Strömungskurzschluß durch die Flügelzellenpumpe bewirkt und so auf einfache Weise eine selbsttätige End- oder Belüftung des Systems ermöglicht. Zur Unterdrückung von Pulsationen ist diese Flügelrückführung nicht geeignet.

Auch mit einer Ventileinrichtung gemäß FR-A-2 550 307, die zur Druckentlastung bzw. Druckregelung in einem hydraulischen System bestimmt ist, lassen sich Pulsationen, wie sie bei einer in zwei Drehrichtungen zu betreibenden Flügelzellenpumpe auftreten können, nicht unterdrücken.

Rückschlagventile sind immer dann in einer Druckmittelverbindung erforderlich, wenn über sie einem Verbraucher ausschließlich Druck zugeführt werden soll. Bei manchen Anwendungsfällen, beispielsweise zentralen Türverriegelungsanlagen, wird einem Verbraucher jedoch über eine Druckmittelverbindung je nach Drehrichtung einer Pumpe Druck zugeführt oder abgeführt, um beispielsweise ein Türschloß in Schließrichtung oder Öffnungsrichtung zu bewegen. Die bekannten Türverriegelungsanlagen arbeiten hierbei mit in ihrer Drehrichtung umkehrbaren Flügelzellenpumpe. Drückt eine solche Flügelzellenpumpe Luft zum Verbraucher, so kommt es nach dem Passieren des Pumpenauslasses durch einen Pumpenflügel zu einer Rückströmung in die nächstfolgende Pumpenkammer. Es muß deshalb immer wieder von neuem Luft verdichtet werden, die vom Verbraucher zurückströmt. Das führt zu Pulsationen und zu einem nutzlosen Energieverbrauch der Flügelzellenpumpe. Mit einem Rückschlagventil kann man diesem Mißstand nicht begegnen, da dann bei Drehrichtungsumkehr der Verbraucher nicht evakuiert werden könnte. Der Erfindung liegt die Aufgabe zugrunde, eine Ventileinrichtung der eingangs genannten Art derart zu gestalten, daß mit ihr pulsierende Rückströmungen vom Verbraucher zur Pumpe bei einer Druckmittelförderung zum Verbraucher vermieden werden können, ohne daß die Möglichkeit einer Rückförderung bei Drehrichtungsumkehr der Pumpe ausgeschlossen wird.

Diese Aufgabe wird erfindungsgemäß durch eine Ventileinrichtung gelöst, die gekennzeichnet ist durch

a) ein Rückschlagventil, das bei Überdruckbetrieb der Flügelzellenpumpe eine Verbindung zwischen Flügelzellenpumpe und Verbraucher freigibt sowie

b) eine weitere Verbindung, die zusätzlich zu der über das Rückschlagventil führenden Verbindung zwischen Flügelzellenpumpe und Verbraucher vorgesehen ist und die eine bei Überdruck betriebene ansprechende Sperreinrichtung aufweist.

Durch diese Gestaltung wird eine Rückströmung von Druckmittel vom Verbraucher in die Pumpe solange vermieden, wie die Pumpe in Richtung des Verbrauchers fördert. Da die Sperreinrichtung jedoch bei Umkehr der Förderrichtung der Pumpe öffnet, sobald kein Überdruck mehr auf sie wirkt, kann unter Umgehung des Rückschlagventils über die weitere Druckmittelverbindung von der Pumpe Druckmittel aus dem Verbraucher gefördert werden. Dadurch kann zum Beispiel ein Stellglied einer zentralen Türverriegelungsanlage durch Drehrichtungsumkehr einer Flügelzellenpumpe in beide Bewegungsrichtungen durch Überdruck oder Unterdruck bewegt werden. Praktische Versuche mit einer Türverriegelungsanlage zeigten, daß dank der Erfindung Pulsationen vermieden werden und sich eine wesentliche Energieeinsparung für den Antrieb der Flügelzellenpumpe ergibt.

Eine vorteilhafte Ausgestaltung der erfindungsgemäßen Ventileinrichtung ist dadurch gekennzeichnet, daß die beiden Verbindungen zwischen Flügelzellenpumpe und Verbraucher in einer gemeinsamen Leitung zusammengelegt sind, in der ein vom jeweiligen Pumpendruck quer zur Durchflußrichtung bewegbare Ventilschieber derart angeordnet ist, daß bei Unterdruckbetrieb ein erster Durchgang und bei Überdruckbetrieb ein zweiter, in Schieberichtung dazu versetzter zweiter Durchgang mit Rückschlagventil in die gemeinsame Leitung geschaltet ist. Dabei ist es zweckmäßig, wenn eine Stirnfläche des Ventilschiebers vom Atmosphärendruck und die andere Stirnfläche vom jeweiligen Pumpendruck beaufschlag ist.

Die Erfindung läßt zahlreiche Ausführungsformen zu. Zur weiteren Verdeutlichung ihres Grundprinzips sind zwei davon schematisch in der Zeichnung dargestellt und werden nachfolgend beschrieben. In ihr zeigen die

Fig. 1     eine erste Ausführungsform der erfindungsgemäßen Ventileinrichtung,

Fig. 2     eine zweite Ausführungsform der erfindungsgemäßen Ventileinrichtung in Verbindung mit einer Flügelzellenpumpe.

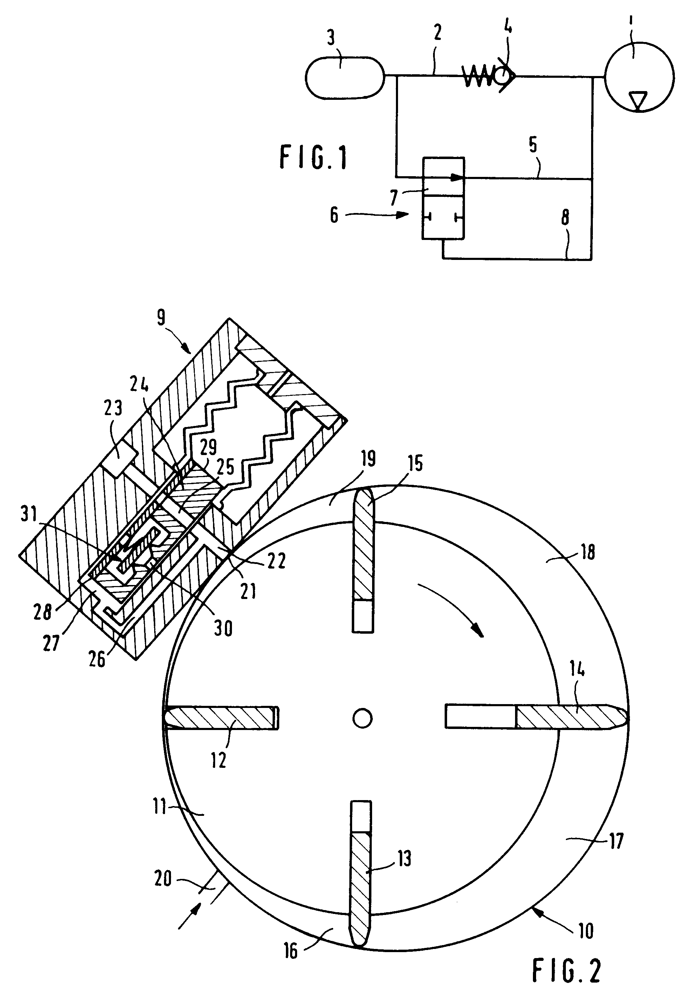

In Figur 1 ist eine Flügelzellenpumpe 1 dargestellt, die über eine Leitung 2 Luft zu einem Verbraucher 3 zu fördern vermag. In die Leitung 2 ist ein in Richtung von der Flügelzellenpumpe 1 zum Verbraucher 3 hin öffnendes Rückschlagventil 4 angeordnet.

Das Rückschlagventil 4 kann über eine Druckmittelverbindung 5 umgangen werden, in die eine Sperreinrichtung 6 geschaltet ist. Diese Sperreinrichtung 6 ist als 2/2-Wegeventil ausgebildet und hat einen zwischen zwei Stellungen verschiebbaren Ventilschieber 7, der durch Federkraft in eine Durchgangsstellung geschaltet ist. Eine Leitung 8 führt den vom Auslaß der Pumpe 1 kommenden Druck der der Ventilfeder gegenüberliegenden Stirnseite des Ventilschiebers zu, so daß er bei Druckbeaufschlagung in Sperrstellung gelangt.

Wenn die Flügelzellenpumpe 1 zum Verbraucher 3 hin fördert, dann ist die Sperreinrichtung 6 geschlossen. Das Rückschlagventil 4 öffnet, sobald der von der Flügelzellenpumpe 1 kommende Druck höher ist als der im Verbraucher 3. Sinkt der von der Flügelzellenpumpe 1 erzeugte Druck unter den des Verbrauchers 3, so schließt das Rückschlagventil 4, so daß es zu keiner Rückströmung kommen kann. Wird die Drehrichtung der Flügelzellenpumpe 1 umgekehrt und von ihr Unterdruck erzeugt, so gelangt die Sperreinrichtung 6 in die gezeigte Durchgangsstellung, so daß die Flügelzellenpumpe 1 den Verbraucher 1 unter Umgehung des Rückschlagventils 4 evakuieren kann.

Die Figur 2 zeigt eine praktische Ausführungsform einer erfindungsgemäßen Ventileinrichtung 9 in Verbindung mit einer Flügelzellenpumpe 10 für eine zentrale Türverriegelungsanlage. Die Flügelzellenpumpe 10 hat einen üblichen, exzentrisch gelagerten Rotor 11 mit vier Flügeln 12, 13, 14, 15, welche Kammern 16, 17, 18 und 19 begrenzen. Die Kammer 16 ist mit einem Pumpeneinlaß 20 und die Kammer 19 mit einem Pumpenauslaß 21 versehen. Am Pumpenauslaß 21 ist die Ventileinrichtung 9 mit einem Ventileinlaß 22 angeschlossen.

Die Ventileinrichtung 9 hat an der dem Ventileinlaß 22 gegenüberliegenden Seite einen Ventilauslaß 23, an der Verbraucher anzuschließen ist. Zur Steuerung der Verbindung zwischen Ventileinlaß 22 und Ventilauslaß 23 dient ein Ventilschieber 24, der in der dargestellten Position über einen Durchgang 25 den Ventileinlaß 22 mit dem Ventilauslaß 23 verbindet.

Vom Ventileinlaß 22 führt innerhalb der Ventileinrichtung 9 ein Druckmittelkanal 26 in einen Druckraum 27 auf der Seite der in der Zeichnung gesehen unteren Stirnfläche 28 des Ventilschiebers 24. Seine gegenüberliegende Stirnfläche 29 ist ständig vom Atmosphärendruck beaufschlagt. Ist im Druckraum 27 Druck vorhanden, so verschiebt sich der Ventilschieber 24 aus der dargestellten Schaltstellung in eine zweite Schaltstellung, in der der Ventileinlaß 22 über einen zweiten Durchgang 30 des Ventilschiebers 24 mit dem Ventilauslaß 23 Verbindung hat. Wichtig für die Erfindung ist, daß im zweiten Durchgang 30 ein Rückschlagventil 31 angeordnet ist, welches in Richtung des Ventilauslasses 23 zu öffnen vermag. Bei dem Rückschlagventil 31 kann es sich auch um ein Flatterventil handeln.

Dreht sich der Rotor 11 im durch einen Pfeil gekennzeichneten Uhrzeigersinn, so saugt die Kammer 19 über den Pumpenauslaß 21 Luft aus der Ventileinrichtung 9. Da dann auch im Druckraum 27 Unterdruck ansteht, nimmt der Ventilschieber 24 die dargestellte Stellung ein, so daß über seinen Durchgang 25 eine Verbindung zum Ventilauslaß 23 und damit zum Verbraucher besteht.

Wird die Drehrichtung des Rotors 11 umgekehrt, so wird Druckmittel aus der Kammer 19 in die Ventileinrichtung 9 gefördert. Der sich aufbauende Druck wirkt auf die Stirnfläche 28 des Ventilschiebers 24 und führt zu einer Verschiebung des Ventilschiebers 24 derart, daß vom Ventileinlaß 2 zum Ventilauslaß 23 nur über den zweiten Durchgang 30 mit dem Rückschlagventil 31 eine Druckmittelverbindung besteht. Sinkt der Druck am Ventileinlaß 22 kurzfristig ab, wenn der Flügel 15 den Pumpenauslaß 21 passiert hat und die noch großvolumigere Kammer 18 mit dem Pumpenauslaß 21 Verbindung erhält, dann kommt es zu keiner Rückströmung vom Verbraucher, weil dann das Rückschlagventil 31 vorübergehend schließt. Wird bei einer Drehrichtungsumkehr jedoch in der Kammer 19 Unterdruck erzeugt, dann schaltet die Ventileinrichtung in die dargestellte Stellung zurück, so daß das Rückschlagventil 31 wirkungslos wird.

**Patentansprüche**

1.    Ventileinrichtung zwischen einer zur Erzeugung von Über- bzw. Unterdruck in zwei Drehrichtungen zu betreibenden Flügelzellenpumpe (1) und einer zentralen Türverriegelungsanlage, gekennzeichnet durch,
     a) ein Rückschlagventil (4), das bei Überdruckbetrieb der Flügelzellenpumpe (1) eine Verbindung (2) zwischen Flügelzellenpumpe (1) und Verbraucher (3) freigibt sowie
     b) eine weitere Verbindung (5), die zusätzlich zu der über das Rückschlagventil (4) führenden Verbindung (2) zwischen Flügelzellenpumpe (1) und Verbraucher (3) vorgesehen ist und die eine bei Überdruckbetrieben ansprechende Sperreinrichtung (6) aufweist.

2.    Ventileinrichtung nach Anspruch 1, dadurch gekennzeichnet, daß die beiden Verbindungen (2, 5) zwischen Flügelzellenpumpe (1) und Verbraucher (3) in einer gemeinsamen Leitung (22, 23) zusammengelegt sind, in der ein vom jeweiligen Pumpendruck quer zur Durchflußrichtung bewegbare Ventilschieber (24) derart angeordnet ist, daß bei Unterdruckbetrieb ein erster Durchgang (25) und bei Überdruckbetrieb ein zweiter, in Schieberichtung dazu versetzter zweiter Durchgang (30) mit Rückschlagventil (31) in die gemeinsame Leitung (22, 23) geschaltet ist.

3. Ventileinrichtung nach Anspruch 2, dadurch gekennzeichnet, daß eine Stirnfläche (29) des Ventilschiebers (24) vom Atmosphärendruck und die andere Stirnfläche (28) vom jeweiligen Pumpendruck beaufschlagt ist.

## Claims

1. Valve device between on the one hand a vane cell pump (1) which is to be operated in two directions of rotation to produce positive pressure and negative pressure respectively and on the other hand a centralised door locking system, characterised by :
   a) a non-return valve (4) which frees a connection (2) between vane cell pump (1) and consumer (3) in positive-pressure operation of the vane cell pump (1), and
   b) a further connection (5) which is provided additionally to the connection (2) between vane cell pump (1) and consumer (3) extending via the non-return valve (4), and which has a shutoff device (6) responding at positive-pressure operations.

2. Valve device according to claim 1, characterised in that the two connections (2, 5) between vane cell pump (1) and consumer (3) are combined in a common conduit (22, 23) in which a slide valve member (24) adapted to be moved by the particular pump pressure at the time transversely to the throughflow direction is so arranged that at negative-pressure operation a first through-way (25) and at positive-pressure operation a second through-way (30), offset in the sliding direction with respect thereto and having a nonreturn valve (31), is connected into the common conduit (22, 23).

3. Valve device according to claim 2, characterised in that one face (29) of the slide valve member (24) is acted upon by atmospheric pressure and the other face (28) by the then occurring pump pressure.

## Revendications

1. Dispositif de commande à soupapes monté entre une pompe (1) multicellulaire à palettes destinée à être entraînée dans deux sens pour créer une surpression ou une dépression, et une installation centrale de verrouillage de portières, dispositif caractérisé par
   a) une soupape (4) de retenue, qui libère une voie (2) de communication entre la pompe (1) et l'ensemble utilisateur (3) lorsque cette pompe refoule de l'air comprimé, et
   b) une autre voie (5) de communication, qui est prévue en plus de la voie (2) passant par la soupape (4) de retenue entre la pompe (1) et l'ensemble utilisateur (3) et qui comporte un dispositif (6) de blocage, lequel est mis en service en réagissant pendant le fonctionnement sous surpression.

2. Dispositif selon la revendication 1, caractérisé en ce que les deux voies (2, 5) de communication entre la pompe (1) et l'ensemble utilisateur (3) sont réunies dans un conduit (22, 23) commun dans lequel le tiroir (24) d'un distributeur, que l'écoulement du fluide passant dans la pompe peut déplacer perpendiculairement au sens de cet écoulement, est disposé de façon que, pendant le fonctionnement sous dépression, ce soit un premier passage (25) et que, pendant le fonctionnement sous pression, ce soit un second passage (30), décalé de ce premier dans le sens de déplacement du tiroir et comportant une soupape (31) de retenue, qui soient mis en service dans le conduit commun.

3. Dispositif selon la revendication 2, caractérisé en ce qu'une face (29) d'extrémité du tiroir (24) du distributeur est soumise à l'action de la pression atmosphérique et l'autre face (28) d'extrémité est soumise à l'action de la pression du fluide refoulé par la pompe.

FIG.1

FIG.2